# EUROPÄISCHE PATENTSCHRIFT

(11) **EP 2 159 366 B1**
(45) Veröffentlichungstag und Bekanntmachung des Hinweises auf die Patenterteilung: **16.11.2016**
(21) Anmeldenummer: 09010716.0
(22) Anmeldetag: 20.08.2009
(51) Int. Cl.: B29C 65/00, B29C 65/08, E06B 3/673

(54) **Verfahren und Vorrichtung zum Herstellen eines rechteckigen Abstandhalterrahmens für Isolierglasscheiben**
Method and device for producing a square spacer frame for insulating glass panes
Procédé et dispositif de fabrication d'un cadre intercalaire carré pour vitres d'isolation

(30) Priorität: 28.08.2008 DE 102008044771
(43) Veröffentlichungstag der Anmeldung: 03.03.2010
(73) Patentinhaber: Rottler und Rüdiger und Partner GmbH, 90579 Langenzenn (DE)
(72) Erfinder: Rottler, Roland, 90522 Oberasbach (DE)
(74) Vertreter: Kunst, Manuel Nikolaus Johannes

(56) Entgegenhaltungen:
- EP-A1- 0 017 564
- WO-A1-2007/014720
- GB-A- 2 020 772
- US-A1- 2007 261 358

## Beschreibung

Die Erfindung betrifft ein Verfahren zum Herstellen eines rechteckigen Abstandhalterrahmens für Isolierglasscheiben aus Kunststoff mit vier jeweils zwischen den vier Rahmenecken angeordneten Rahmenschenkeln und mit in die Enden der Rahmenschenkel eingreifenden Eckverbindern, wobei die Eckverbinder zwei im rechten Winkel zueinander angeordnete Winkelschenkel haben, die in die Rahmenschenkel eingefügt werden, wonach die Rahmenschenkel miteinander verbunden werden, vor dem Zusammenfügen zweier in Gebrauchsstellung rechtwinklig zueinander stehender Rahmenschenkel der gemeinsame Eckverbinder in einen dieser Rahmenschenkel endseitig eingesteckt und dann mit dem anderen Rahmenschenkel in Richtung seines freien Winkelschenkels maschinell zusammengesteckt oder der andere Rahmenschenkel in Richtung des freien Winkelschenkels auf diesen aufgesteckt wird.

Ein vergleichbares Verfahren ist aus der EP 0 017 564 A1 bekannt. Die jeweils rechtwinklig zueinander anzuordnenden und miteinander zu verbindenden Rahmenschenkel haben dabei rechtwinklig zu ihrem Verlauf angeordnete Stirnflächen, deren jede an eine entsprechende Formung des Eckverbinders in Gebrauchsstellung anstoßen muss, wobei diese Stirnseiten der Rahmenschenkel in Gebrauchsstellung einen Abstand zueinander haben, der es zur Abdichtung erforderlich macht, diese Abstände mit Kunststoff auszuspritzen. Dies ergibt eine wenig stabile Verbindung der Eckbereiche des Absatndhalterrahmens und macht relativ lange Vorsprünge des Eckverbinders erforderlich, die in die Rahmenschenkel entsprechend tief eingreifen müssen. Dennoch sind die Rahmenschenkel selbst nicht miteinander verbunden und die vorbekannte Verfahrensweise ist auch im Hinblick darauf, dass Kunststoff hinzuzufügen ist, als aufwendig anzusehen und benötigt relativ viel Zeit.

Aus der EP0017564 ist ein Verfahren bekannt wobei
Rahmenschenkel maschinell zusammengesteckt werden.

Es besteht deshalb die Aufgabe, ein Verfahren der eingangs definierten Art und auch eine Vorrichtung zum Herstellen von Abstandhalterrahmen zu schaffen, womit eine einfache und schnelle Fertigung möglich ist und auch im Eckbereich des entstehenden Abstandhalterrahmens eine möglichst glatte Dichtfläche vorgesehen ist, selbst wenn die Rahmenschenkel aus relativ dünnwandigen Profilen gebildet sind.

Zur Lösung dieser Aufgabe ist das eingangs definierte Verfahren dadurch gekennzeichnet, dass die einzelnen Rahmenschenkel an ihren beiden freien Enden auf Gehrung geformt oder geschnitten werden, dass die Steckbewegung solange fortgesetzt wird, bis die auf Gehrung geformten Enden der Rahmenschenkel in Berührung miteinander gelangen, und dass die Berührstelle der beiden Rahmenschenkel zusammengedrückt und die Rahmenschenkel an der Berührstelle verschweißt oder verschmolzen werden und dass zumindest die Eckbereiche an den die dichtstellendes Abstandhalterrahmens bildenden Stegen während des Schweißvorganges niedergehalten und gemeinsam gegen einen
Gegenhalter oder eine Auflage gedrückt werden. Dadurch kann erreicht werden, dass die zu verbindenden Rahmenschenkel nicht von vorneherein zusammenhängen müssen, sondern als einzelne Rahmenschenkel mit auf Gehrung geformten Enden verwendet werden können, die nicht oder nicht nur mit dem Eckverbinder, sondern in erster Linie oder ausschließlich miteinander verschweißt sind, so dass sich keine Unebenheiten des Schweißbereiches durch eine Verbindung mit dem innenliegenden Eckverbinder ergibt. Der Eckverbinder muss dabei nicht einmal das gesamte Querschnittsprofil der hohlen Rahmenschenkel ausfüllen, sondern es kann genügen, wenn sein Querschnitt von der Außenseite zur Innenseite des späteren Abstandhalterrahmens reicht, nach den Seiten hin aber innenseitig zu den die Rahmenschenkel bildenden Stegen einen Abstand freilässt.

Durch das erfindungsgemäße Verfahren können relativ dünnwandige Profile als Rahmenschenkel verarbeitet werden, weil vor allem die Kraft zum Andrücken an die Berührstelle nicht über die Länge des Profiles übertragen werden muss, sondern der Rahmenschenkel insbesondere nahe der Schweißstelle erfasst und dabei auch über eine größere Länge umfasst werden kann, so dass die Kraft in Richtung auf die Schweißstelle auf eine relativ große Fläche des Rahmenschenkels verteilt wird.

Durch das Niederhalten zumindest der Eckbereiche der zu verscheißenden Schenkel gegen eine Unterlage kommen also beispielweise an den späteren Außenseiten des Abstandhalterrahmens die Sonotroden zur Anlage, während die Quer dazu verlaufenden Dichtstellen des Abstandhalterrahmens ebenfalls erfasst und an ungewollten Verformungen oder Nahtbildungen gehindert werden, so dass die gewünschte glatte Oberfläche für eine gute Abdichtung erhalten wird.

Der Eckverbinder wird zweckmäßigerweise mit einem Winkelschenkel in den ersten Rahmenschenkel vollständig eingefügt und danach kann der zweite Rahmenschenkel auf den noch freien Winkelschenkel des Eckverbinders aufgeschoben und dabei verschiebbar verklemmt werden. Somit kann ein Zwischenprodukt beispielsweise aus zwei durch einen Eckverbinder zusammengesetzten Winkelschenkeln geschaffen werden, das dann mit einem vergleichbaren weiteren Zwischenprodukt zu einem Rahmen zusammengesetzt werden kann, oder es kann in noch zu beschreibender Weise an einem Rahmenschenkel zunächst vorgesehen werden, an den entgegengesetzten Enden jeweils einen Eckverbinder anzubringen und danach den kompletten Rahmen aufzubauen.

Günstig ist es dabei, wenn der jeweils zunächst mit einem Rahmenschenkel zusammengesteckte Eckverbinder mit seinem zuerst in einen Rahmenschenkel eingefügten Winkelschenkel verschiebbar verklemmt wird. Dadurch wird die Lage des Eckverbinders genügend festgelegt, um das so gebildete Zwischenprodukt während der Herstellung eines kompletten Rahmenschenkels genügend stabil zu gestalten, um dann an den freien Enden solcher Eckverbinder eine Verbindung mit weiteren Rahmenschenkeln vornehmen zu können.

Zweckmäßig kann es zum Beispiel auch sein, wenn in beide entgegengesetzten Enden eines Rahmenschenkels Eckverbinder eingefügt und zwei dazu passende Rahmenschenkel parallel zueinander maschinell aufgeschoben oder verschweißt werden, wobei die Relativbewegung zwischen den beiden parallelen Rahmenschenkeln und den quer verlaufenden, schon mit Eckverbindern versehenen Rahmenschenkeln natürlich auch in umgekehrter Richtung erfolgen kann.

Es ist also auch möglich, dass ein Rahmenschenkel mit zwei Eckverbindern versehen und mit diesen in die freien Enden zweier paralleler, gegebenenfalls schon mit einem ersten rechtwinkligen Rahmenschenkel verbundener Rahmenschenkel eingeschoben und an den Berührstellen verschweißt wird.

Das erfindungsgemäße Verfahren lässt sich auch dadurch weiterbilden, dass zwei rechtwinklig zueinander angeordnete Rahmenschenkel miteinander verbunden und am freien Ende eines dieser Rahmenschenkel ein Eckverbinder angebracht und ein zweites Paar von rechtwinklig angeordneten Rahmenschenkeln gebildet und die Eckverbinder in die freien Enden der beiden zum Schließen des Rahmens zu erfassenden Rahmenschenkel eingeschoben werden. Dabei kann variiert werden, in welches freie Ende eines der zusammenzufügenden Rahmenschenkel der Eckverbinder zuerst eingesetzt wird.

Eine zweckmäßige Realisierung des erfindungsgemäßen Verfahrens kann vorsehen, dass jeweils zwei in Gebrauchsstellung rechtwinklig zueinander angeordnete Rahmenschenkel des zu bildenden Abstandhalterrahmens an einer gemeinsamen Gehrungsstelle mit Hilfe eines Eckverbinders abgestützt und verschweißt werden und dass danach diese beiden jeweils einen Winkel bildenden Rahmenteile in Richtung von aus freien Enden von Rahmenschenkeln vorstehenden Eckverbindern maschinell zusammengeschoben und an den dadurch gebildeten beiden diagonal einander gegenüberliegenden Ecken verschweißt werden.

Es ist also möglich, mit dem erfindungsgemäßen Verfahren unterschiedliche Zwischenprodukte zu bilden, bei denen beispielsweise zwei rechtwinklig zueinander stehende Rahmenschenkel zweifach vorgefertigt und dann miteinander verbunden werden oder in dem zunächst an einem querverlaufenden Rahmenschenkel zwei Ecken durch zwei parallele weitere Rahmenschenkel gebildet werden, so dass dann der Rahmen noch mit einem letzten Rahmenschenkel zu schließen ist, dessen beide Enden dabei schon einen Eckverbinder enthalten.

Besonders günstig ist es für einen Abstandhalterrahmen aus Kunststoff, wenn die Rahmenschenkel mittels Ultraschall verschweißt werden. Dies lässt sich auch maschinell gut beherrschen und führt zu dauerhaften Schweißverbindungen.

Bei einer derartigen Ultraschall-Verschweißung ist es günstig, wenn die Sonotroden der Ultraschall-Schweißvorrichtung an die den inneren Zwischenraum des Rahmens abgewandte Außenseite der zu bildenden jeweiligen Ecke angelegt werden, vorzugsweise in der Weise, dass der Berührbereich der Rahmenschenkel umfasst wird. Entsprechend präzise wird die jeweilige Ecke geschweißt.

Zumindest die Eckbereiche an den die Dichtstellen des Abstandhalterrahmens bildenden Schenkeln können während des Schweißvorganges niedergehalten und gegen eine Unterlage gedrückt werden. Während also an der späteren Außenseite des Abstandhalterrahmens die Sonotroden zur Anlage kommen, können die quer dazu verlaufenden Dichtstellen des Abstandhalterrahmens ebenfalls eingefasst und an ungewollten Verformungen oder Nahtbildungen gehindert werden, so dass sie die gewünschte glatte Oberfläche behalten oder erhalten.

Die eingangs genannte Aufgabe wird außerdem mit einer Vorrichtung gemäss Anspruch 10 gelöst. Die Vorrichtung zum Herstellen eines rechteckigen Abstandhalterrahmens für Isolierglasscheiben aus Kunststoff mit vier Rahmenschenkeln und vier Eckverbindern, die in die einander zugewandten Enden der Rahmenschenkel einsteckbar sind und in Gebrauchsstellung eingreifen, wobei die Rahmenschenkel in Gebrauchsstellung in den Eckbereichen miteinander verschweißt sind, hat wenigstens zwei rechtwinklig zueinander angeordnete Klemmeinrichtungen zum Erfassen zweier rechtwinklig an einer gemeinsamen Ecke zusammenzufügender Rahmenschenkel wobei wenigstens eine dieser Klemmvorrichtungen in Richtung der Orientierung ihres Klemmspalts und eines darin gehaltenen Rahmenschenkels bewegbar ist, und wobei an der zwischen diesen beiden Klemmeinrichtungen angeordneten Ecke eine Ultraschall-Schweißvorrichtung angeordnet ist. Die Sonotroden dieser Ultraschall-Schweißvorrichtung können für ein formschlüssiges Abstützen und Umfassen der Außenseite der zu bildenden Ecke eine negative rechtwinklige Ecke aufweisen, die während des Schweißvorganges an der Außenseite der zusammengefügten und zusammengeschobenen Rahmenschenkel anliegt, oder dass die Ultraschall-Schweißvorrichtung eine die Ecke mit einem Vorsprung umfassende Sonotrode und eine dazu beabstandete Sonotrode aufweist. Für den Eckbereich zwischen den Klemmeinrichtungen sind Niederhalter vorgesehen, die jeweils zwei zu einer Ecke zu verbindende Rahmenschenkel im Eckbereich an der späteren Dichtfläche in Gebrauchsstellung berühren und gegen einen Gegenhalter oder eine Auflage drücken.

Somit können die an einer Ecke zu verbindenden Rahmenschenkel maschinell erfasst und in ihrem gemeinsamen Eckbereich zusammengebracht werden, indem eine der Klemmeinrichtungen die entsprechende Bewegung durchführt, wobei zuvor schon die Eckverbinder in entsprechender Weise angebracht worden sind. Die Sonotroden können dabei die Außenseite der Rahmenschenkel im Bereich ihrer gegenseitigen Berührung formschlüssig abstützen und erfassen und erlauben während des Schweißvorganges somit keine Verformung aus ihrer Winkligkeit heraus, so dass die außen liegenden Eckbereiche des Abstandhalterrahmens präzise geformt werden können.

Besonders günstig ist es, wenn alle Klemmvorrichtungen jeweils in Richtung zu der Ecke und der Schweißvorrichtung hin bewegbar oder verstellbar sind. Dies ergibt eine besonders vielseitig anwendbare Vorrichtung, um die Rahmenschenkel eines Abstandhalterrahmens maschinell zusammenzuführen, aneinanderzudrücken und dann im Eckbereich verschweißen zu können.

Für die Herstellung eines rechteckigen Abstandhalterrahmens mit vier auf Gehrung geschnittenen und zu verbindenden Rahmenschenkeln ist es besonders günstig, wenn die erfindungsgemäße Vorrichtung vier Ultraschall-Schweißvorrichtungen für die vier zu bildenden Ecken des Abstandhalterrahmens aufweist und jeder Schweißvorrichtung beidseits eine Klemmeinrichtung zugeordnet ist, die zu der Schweißvorrichtung hin orientiert und/oder bewegbar ist. Somit können einzelne oder schon teilweise verbundene Rahmenschenkel erfasst und nacheinander verbunden werden, bis der Abstandhalterrahmen fertiggestellt ist. Die Klemmeinrichtungen dienen dabei dann dazu, jeweils den einen oder den anderen Rahmenschenkel auf einen noch freien Winkelschenkel eines schon teilweise eingesetzten Eckverbinders aufzuschieben, um anschließend dann die Schweißung durchzuführen.

Zumindest zwei rechtwinklig zueinander angeordnete Klemmeinrichtungen können mit der im Eckbereich zwischen ihnen befindlichen Schweißvorrichtung relativ zu den weiteren Klemmeinrichtungen in Richtung eines Rahmenschenkels verschiebbar sein, so dass zwei einzeln hergestellte Rahmenwinkel an ihren noch offenen Seiten mittels der Klemmeinrichtungen zusammenschiebbar und auf das freie Ende eines Eckverbinders steckbar sind. Es ist also durch diese Ausgestaltung möglich, zwei rechtwinklig zueinander angeordnete Rahmenschenkel mit Hilfe eines Eckverbinders zu verbinden, dasselbe mit zwei weiteren Rahmenschenkeln zu machen und dann in jeweils freie Enden der Rahmenschenkel Eckverbinder einzustecken, um dann die zunächst jeweils aus zwei rechtwinklig zueinander angeordneten Rahmenschenkeln gebildeten Rahmenwinkel endgültig zusammenzuschieben und dabei die offenen Enden jeweils eines Rahmenschenkels auf einen Winkelschenkel eines der Eckverbinder aufzustecken. Somit kann mit der Vorrichtung einerseits jeweils ein derartiger Rahmenwinkel gefertigt und durch die relative Verschiebbarkeit zweier Klemmeinrichtungen mit Schweißverbindung dann ein derartiger Rahmenwinkel relativ zu dem anderen Rahmenwinkel zum Schließen des gesamten Abstandhalterrahmens verstellt werden.

Zumindest diejenigen Klemmeinrichtungen, die eine Verschiebung zum endgültigen Zusammenfügen zweier schon vorgefügter Rahmenteile dienen, können unterteilt oder aus zwei beabstandeten Klemmeinrichtungen gebildet sein, deren Klemmfugen also miteinander fluchten, und die dem freien Ende eines zufügenden Rahmenschenkels nähere Klemmeinrichtung dieser beiden Klemmeinrichtungen kann zunächst zum Aufbau einer ein Ausknicken des Rahmenschenkels bei dem Fügevorgang verhindernden Zugspannung in dem von ihr erfassten Rahmenschenkel dienen. Wenn also zwei Klemmeinrichtungen miteinander fluchtend an einem Rahmenschenkel angreifen, der beispielsweise durch die Verschiebung der Klemmeinrichtungen auf einen freien Winkelschenkel eines Eckverbinders aufgeschoben werden soll, kann zunächst die der Ecke nähere Klemmeinrichtung in Schieberichtung bewegt oder zumindest unter Spannung gesetzt werden, so dass in dem erfassten Rahmenschenkel die erwähnte Zugspannung entsteht. Dadurch kann verhindert werden, dass bei dem schon erwähnten Steckvorgang dieser Rahmenschenkel zu sehr in Schieberichtung unter Druck gesetzt wird und gegebenenfalls ausknickt.

Besonders günstig ist es, wenn bei der erfindungsgemäßen Vorrichtung an allen vier Seiten jeweils Klemmeinrichtungen doppelt und beabstandet vorgesehen sind, was die größte Vielseitigkeit der Vorrichtung für das Herstellen eines Abstandhalterrahmens ergibt.

Die einer Ecke oder Schweißvorrichtung nahe Klemmeinrichtung kann von der gedachten oder beim Zusammenfügen eines Rahmenschenkels gebildeten Ecke einen Abstand von etwa einem sechstel oder einem achtel oder einem zehntel Meter oder weniger oder einem Zwischenwert davon haben. Je näher die Klemmeinrichtung der jeweiligen Ecke ist, umso geringer ist die Gefahr einer Knickbelastung eines Rahmenschenkels bei seiner Verschiebung in seiner Längsrichtung, um ihn auf einen Winkelschenkels eines Eckverbinders aufzustecken, selbst wenn dabei eine Reibkraft zu überwinden ist, damit danach der Eckverbinder mit dem Rahmenschenkel reibend oder klemmend verbunden ist.

Für den Eckbereich der Vorrichtung sind etwa zwischen den
Klemmeinrichtungen Niederhalter vorgesehen, die jeweils zwei zu einer Ecke zu verbindende Rahmenschenkel im Eckbereich an der späteren Dichtfläche des Abstandhalterrahmens in Gebrauchsstellung berühren und gegen einen Gegenhalter oder eine Auflage drücken. Somit wird auch der für die Abdichtung wichtige Teilbereich des Abstandhalterrahmens rechtwinklig zu den Außenseiten glatt gehalten und an eventuellen Verformungen durch den Schweißvorgang gehindert.

Eine weitere zweckmäßige Ausgestaltung der Vorrichtung kann vorsehen, dass in den Eckbereichen der jeweiligen Schweißvorrichtung oder dem Schweißkopf ein Widerlager zugeordnet ist, welches in Gebrauchsstellung von dem Schweißkopf einen der Dicke des Rahmenschenkels entsprechenden Abstand hat und wenn das Widerlager vorzugsweise zwei rechtwinklig zueinander angeordnete, der Schweißvorrichtung zugewandte und den Wirkflächen der Sonotroden parallele Stützfläche hat. Somit wird auch die Innenseite des Abstandhalterrahmens während des Schweißvorganges in Form gehalten und an einer unerwünschten Verformung gehindert. Vor allem bei Kombination der vorbeschriebenen Merkmale und Maßnahmen wird der gesamte Eckbereich während des Schweißvorganges präzise umschlossen, so dass der Abstandhalterrahmen im Eckbereich auch nach dem Schweißvorgang den gewünschten, außenseitig ebenen und glatten Gesamtquerschnitt hat und behält.

Vor allem bei Kombination einzelner oder mehrerer der vorbeschriebenen Verfahrens- und Vorrichtungsmerkmale ist es möglich, einen Abstandhalterrahmen mit vier auf Gehrung geschnittenen Ecken im Wesentlichen maschinell aufzubauen und die vier Ecken mittels Ultraschall zu verschweißen. Da ein reines Verschweißen der Ecken die Gefahr einer ungewollten Verformung und/oder einer unzureichenden Stabilität mit sich bringt, ist vorgesehen, in die vier Rahmenecken jeweils in entsprechender Reihenfolge Eckverbinder einzusetzen, die den Innenquerschnitt des Rahmenprofils zumindest in Richtung von der Außenseite zur Innenseite hin ausfüllen.

Nachstehend sind Ausführungsbeispiele der Erfindung anhand der Zeichnung näher beschirieben. Es zeigt in zum Teil erheblich schematisierter Darstellung:
- Fig. 1:: eine Ansicht einer erfindungsgemäßen Vorrichtung zum maschinellen Herstellen von rechteckigen Abstandhalterrahmen für Isolierglasscheiben mit vier zusammenwirkenden Schweißstationen, an denen jeweils zwei rechtwinklig zueinander angeordnete Rahmenschenkel nach dem Einfügen von Eckverbindern an ihren auf Gehrung geformten Berührstellen verschweißbar sind,
- Fig. 2:: eine der Figur 1 entsprechende Darstellung während eines Fügevorgangs, bei welchem zwei jeweils schon rechtwinklig zueinander angeordnete Rahmenschenkelpaare zusammengeschoben und zusammengesteckt werden, wonach die in Figur 2 noch offenen Eckbereiche verschweißt werden,
- Fig. 3:: in vergrößertem Maßstab eine Ansicht einer der Schweißstationen der Vorrichtung gemäß den Figuren 1 und 2,
- Fig. 4:: einen Schnitt durch den Eckbereich der Schweißstation, wobei ein Rahmenschenkel und ein Winkelschenkel eines Eckverbinders im Querschnitt dargestellt sind,
- Fig. 5:: das Prinzip der Verbindung zweier Rahmenschenkel, nachdem der Eckverbinder in einem Rahmenschenkel bereits eingesteckt ist und der zweite Winkelschenkel mit einem zweiten Rahmenschenkel zusammensteckbar ist,
- Fig. 6:: eine Möglichkeit, einen Abstandhalterrahmen dadurch zu bilden, dass jeweils einer der vier Rahmenschenkel an einem Ende mit einem Eckverbinder versehen wird, der zum Zusammenstecken mit einem Nachbarrahmenschenkel vorgesehen ist, bevor dieser Steckvorgang durchgeführt ist,
- Fig. 7:: eine Darstellung, in welcher jeweils rechtwinklig zueinander verlaufende Rahmenschenkel an einer gemeinsamen Ecke zusammengesteckt sind und diese Paare von Rahmenschenkel miteinander an diagonal gegenüberliegenden Ecken zusammensteckbar sind,
- Fig. 8:: den durch die verschiedenen Steck- und Fügebewegungen gemäß den Figuren 6 und 7 gebildeten Abstandhalterrahmen,
- Fig. 9:: eine abgewandelte Vorgehensweise, bei welcher zwei in Gebrauchsstellung einander gegenüberliegende parallele Rahmenschenkel an beiden Enden mit Eckverbindern versehen sind und die rechtwinklig dazu stehenden Rahmenschenkel auf die freien Enden der Eckverbinder eines dieser Rahmenschenkel aufsteckbar sind,
- Fig. 10:: die Einfügung des zweiten, jeweils zwei Eckverbinder aufweisenden Rahmenschenkels in die mit dem ersten querverlaufenden Rahmenschenkel bereits zusammengesteckten Rahmenschenkel, wodurch wiederum ein Rahmen gemäß Fig. 8 entsteht,
- Fig. 11:: die Anordnung einer Sonotrode einer Ultraschall-Schweißvorrichtung an einer zuvor gebildeten Ecke des Rahmens während des Schweißvorganges, wobei die Sonotrode eine negative rechtwinklige Ecke zum Umfassen der Rahmenecke aufweist,
- Fig. 12:: eine gegenüber Fig. 11 abgewandelte Anordnung von Sonotroden, deren eine einen die Ecke umgreifenden Vorsprung hat, welchem eine zweite Sonotrode benachbart ist,
- Fig. 13:: eine abgewandelte Ausführungsform, bei welcher zwei einzelne Sonotroden den Eckbereich eines Rahmens beaufschlagen, sowie
- Fig. 14:: fünf Beispiele von möglichen Querschnitten der Rahmenschenkel des Abstandhalterrahmens.

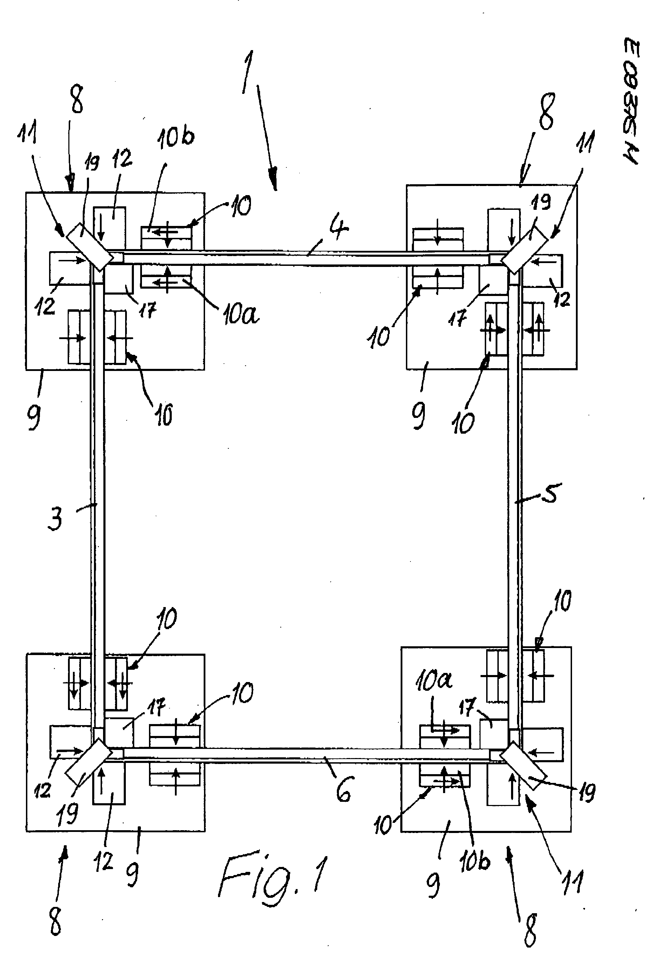

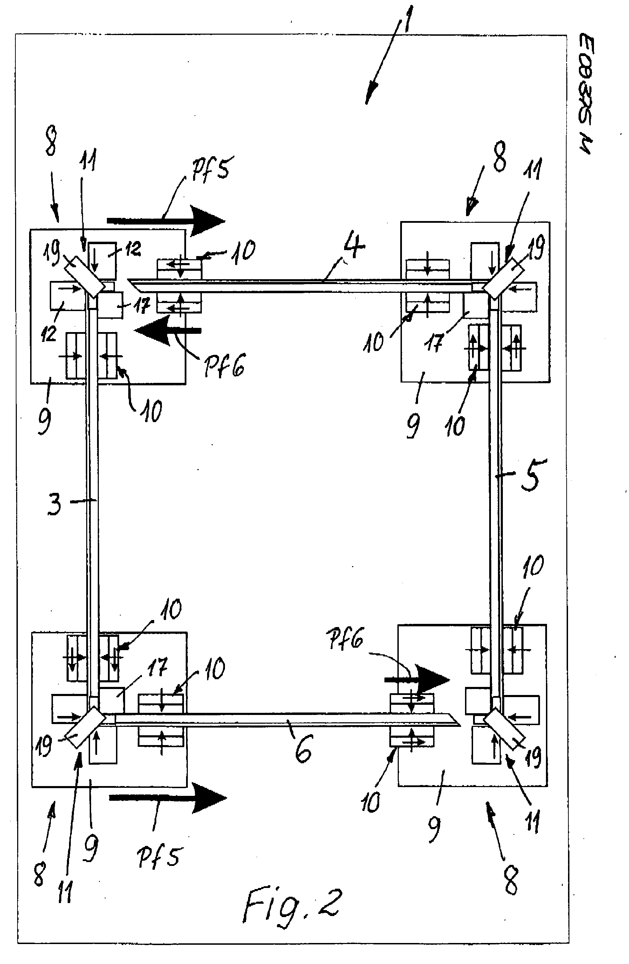

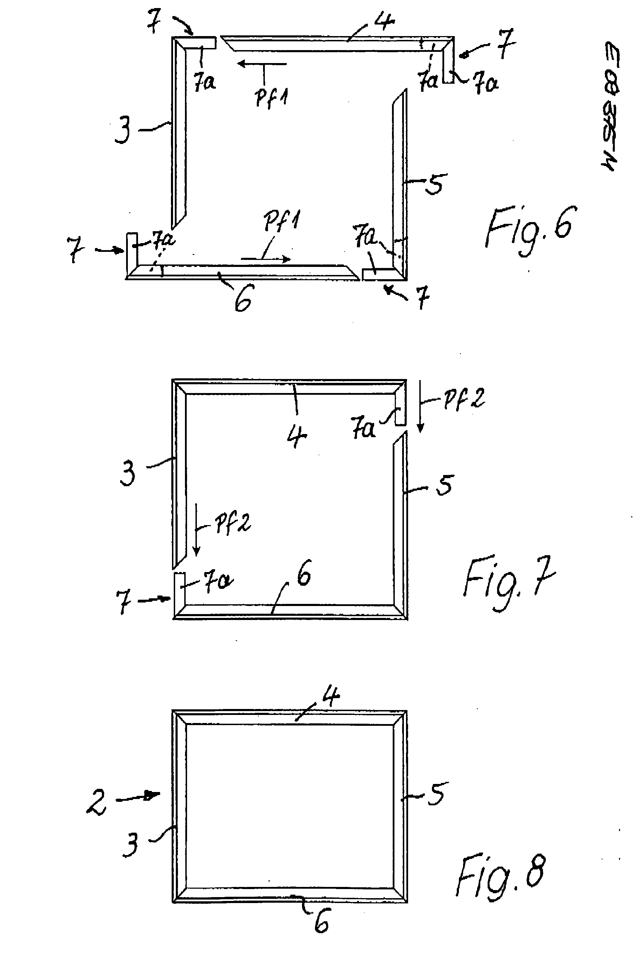

Eine im Ganzen mit 1 bezeichnete, in den Figuren 1 und 2 schematisiert in einer Ansicht dargestellte Vorrichtung dient zum maschinellen Herstellen eines rechteckigen Abstandhalterrahmens 2 (vgl. Fig. 8) für Isolierglasscheiben aus Kunststoff oder synthetischem Material mit vier Rahmenschenkeln 3, 4, 5 und 6 und vier Eckverbindern 7, die in die einander zugewandten Enden der Rahmenschenkel 3, 4, 5 und 6 einsteckbar sind und in Gebrauchsstellung dabei jeweils mit ihren Winkelschenkeln 7a in die einander zugewandten, rechtwinklig zueinander stehenden Enden der Rahmenschenkel 3, 4, 5 und 6 einsteckbar sind und in Gebrauchsstellung gemäß Figur 8 und auch gemäß Figur 1 eingreifen. Nach Fertigstellung eines derartigen Abstandhalterrahmens 2 sind dabei außerdem die Rahmenschenkel 3, 4, 5 und 6 an ihren Eckbereichen in noch zu beschreibender Weise miteinander verschweißt.

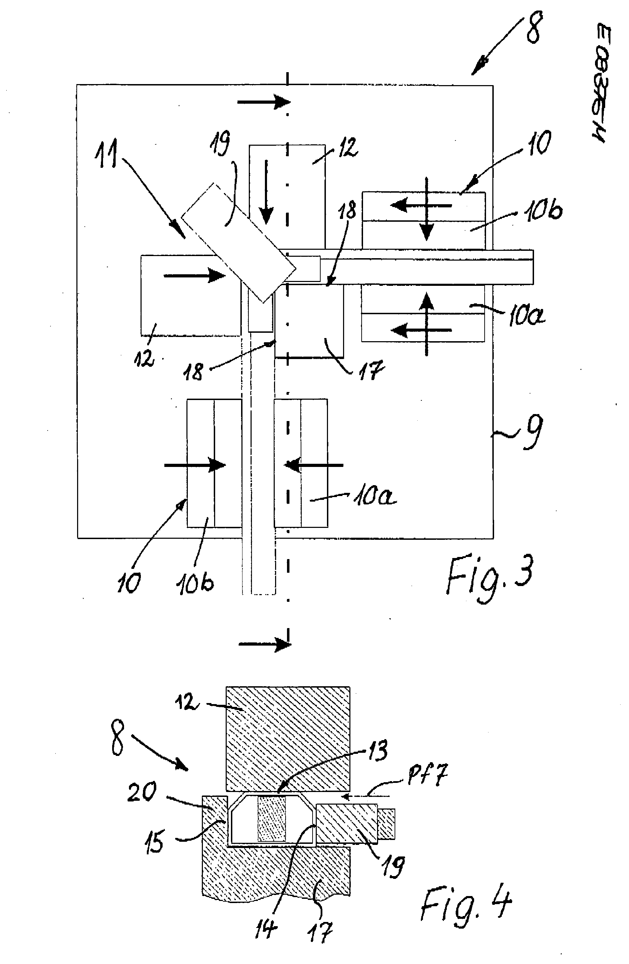

Gemäß Figur 1 und 2 weist die Vorrichtung 1 insgesamt vier Schweißstationen 8 auf, die jeweils auf Montageplatten 9 mit weiteren wesentlichen Aggregaten der Vorrichtung 1 angeordnet sind. Vor allem in Fig. 3 und 4 erkennt man die wesentlichen Teile einer solchen Schweißstation 8 mit Montageplatten 9 in gegenüber Figur 1 und 2 vergrößertem Maßstab.

Demgemäß ist wichtig, dass die Vorrichtung 1 an ihren einzelnen Schweißstationen 8 zwei rechtwinklig zueinander angeordnete Klemmeinrichtungen 10 zum Erfassen von jeweils zwei rechtwinklig an einer gemeinsamen Ecke zusammenzufügender Rahmenschenkel aufweist. Diese Klemmeinrichtungen 10 haben zwischen zwei Klemmbacken 10a und 10b einen in den Figuren 1 bis 4 durch jeweils einen Rahmenschenkel ausgefüllten Klemmspalt, können also jeweils einen Rahmenschenkel erfassen. Durch Pfeile ist außerdem angedeutet, dass die Klemmeinrichtungen 10 neben ihrer Klemmfunktion auch noch in Längsrichtung ihres Klemmspaltes und eines darin gehaltenen Rahmenschenkels jeweils bewegbar sind.

Außerdem ist an jeder Schweißstation 8 an der zwischen diesen beiden Klemmeinrichtungen 10 angeordneten Ecke eine im Ganzen mit 11 bezeichnete Ultraschall-Schweißvorrichtung angeordnet. Alle Klemmvorrichtungen 10 sind dabei in Richtung zu der Ecke und zu der Schweißvorrichtung 11 hin bewegbar oder verstellbar.

Es sei erwähnt, dass die Vorrichtung 1 im Ausführungsbeispiel etwa vertikal oder unter einem spitzen Schrägungswinkel angeordnet ist, d.h. Figur 1 und 2 sind Seitenansichten. Denkbar wäre aber auch eine im Ganzen horizontale Anordnung, bei welcher alle vier Rahmenschenkel etwa in einer gemeinsamen horizontalen Ebene liegen.

In den Figuren 2 und 5 bis 10 erkennt man, dass die einzelnen Rahmenschenkel 3, 4, 5 und 6 an ihren beiden freien Enden auf Gehrung geformt oder geschnitten sind, so dass sie sich in Figur 8 jeweils mit diesen freien Enden unmittelbar berühren und entsprechend miteinander verschweißt werden können.

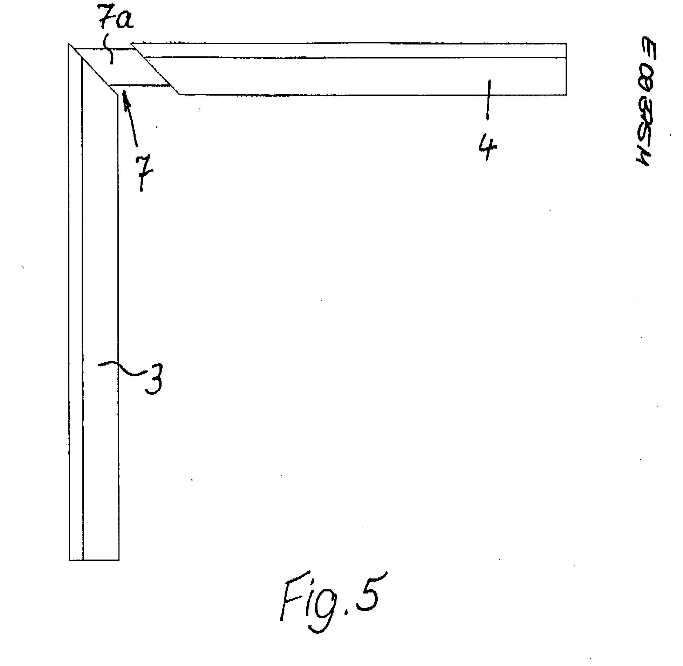

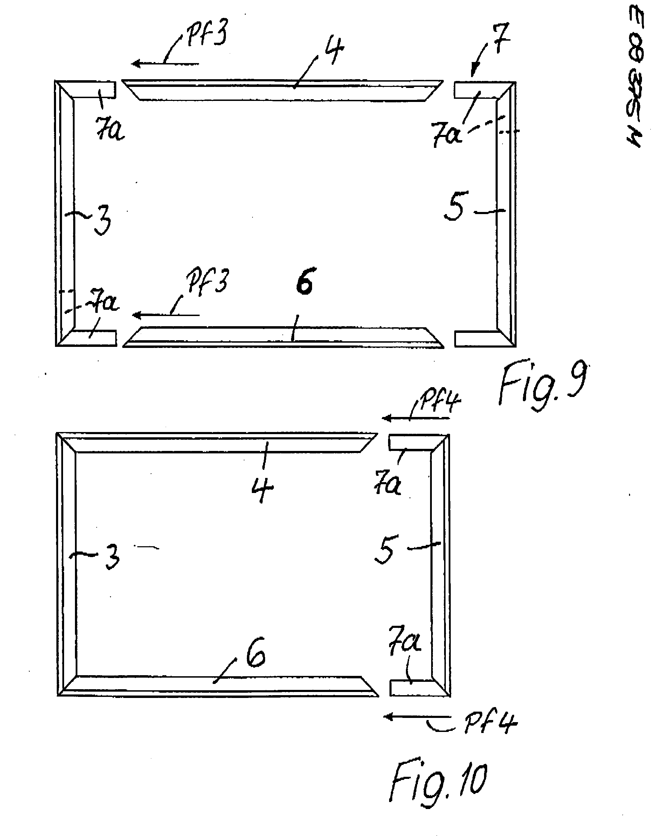

Gemäß Figur 5 und 6 oder gemäß Figur 9 wird dabei vor dem Zusammenfügen zweier in Gebrauchsstellung rechtwinklig zueinanderstehender Rahmenschenkel der gemeinsame Eckverbinder 7 in einen dieser Rahmenschenkel, z.B. in den Rahmenschenkel 3, endseitig eingesteckt und dann mit dem anderen Rahmenschenkel 4 in Richtung seines freien Winkelschenkels 7a maschinell zusammengesteckt, was in Figur 6 durch die Zeile Pf1 angedeutet ist. Da es sich dabei um Relativbewegungen handelt, kann beispielsweise dieser andere Rahmenschenkel 4 in Richtung des freien Winkelschenkels 7a auf den Eckverbinder 7 aufgesteckt werden, der aus dem Rahmenschenkel 3 vorsteht. Diese Steckbewegung, sei es dass der Rahmenschenkel 4 bewegt wird oder dass der Rahmenschenkel 3 zusammen mit seinem Eckverbinder 7 bewegt wird, wird solange fortgesetzt, bis die auf Gehrung geformten Enden der Rahmenschenkel gemäß Figur 7 oder gemäß Figur 10 in Berührung miteinander gelangen. Danach kann die Berührstelle in noch zu beschreibender Weise zusammengedrückt und der Schweißvorgang zur Verbindung dieser Gehrungsecken durchgeführt werden.

Gemäß den Figuren 5 bis 10 werden dabei die Eckverbinder 7 mit einem Winkelschenkel 7a jeweils in einen zugehörigen Rahmenschenkel vollständig eingefügt und eingeschoben, wonach der zugehörige rechtwinklige nächste Rahmenschenkel auf den noch freien Winkelschenkel 7a dieses Eckverbinders 7 aufgeschoben und dabei zweckmäßigerweise verschiebbar verklemmt wird. Auf diese Weise können beispielsweise zunächst zwei Paare von winklig zusammengesteckten Rahmenschenkeln 3 und 4 einerseits und von winklig zusammengesteckten Rahmenschenkeln 5 und 6 andererseits gebildet werden, wie es in Figur 7 angedeutet ist. Aus den Rahmenschenkeln 4 und 6 ragen dabei jeweils Winkelschenkel 7a von Eckverbindern 7 heraus, so dass diese beiden Winkelschenkelpaare gemäß den Pfeilen Pf2 zu einem geschlossenen Rahmen 2 gemäß Figur 8 mit Hilfe der Vorrichtung 1 maschinell zusammengesteckt und zusammengeschoben werden können.

Gemäß den Figuren 9 und 10 ist es aber auch möglich, dass in jeweils entgegengesetzte Enden eines Rahmenschenkels 3 und 5 Eckverbinder 7 eingefügt und zwei dazu passende Rahmenschenkel 4 und 6 parallel zueinander aufgeschoben und dann verschweißt werden, wobei gemäß Figur 10 zunächst die Rahmenschenkel 4 und 6 entsprechend den Pfeilen Pf3 in Figur 9 mit den Eckverbindern 7 zusammengesteckt werden, die aus dem rechtwinkligen Rahmenschenkel 3 vorstehen, wonach dann gemäß den Pfeilen Pf 4 in Figur 10 der Rahmenschenkel 5 mit seinen beiden Eckverbindern 7 mit den Rahmenschenkeln 4 und 6 wiederum maschinell zusammengesteckt wird, wobei auch umgekehrt das aus den drei Rahmenschenkeln 3, 4 und 6 gebildete Zwischenprodukt entgegen den Pfeilen Pf4 auf die freien Winkelschenkel 7a des Rahmenschenkels 5 aufgeschoben und aufgesteckt werden könnten.

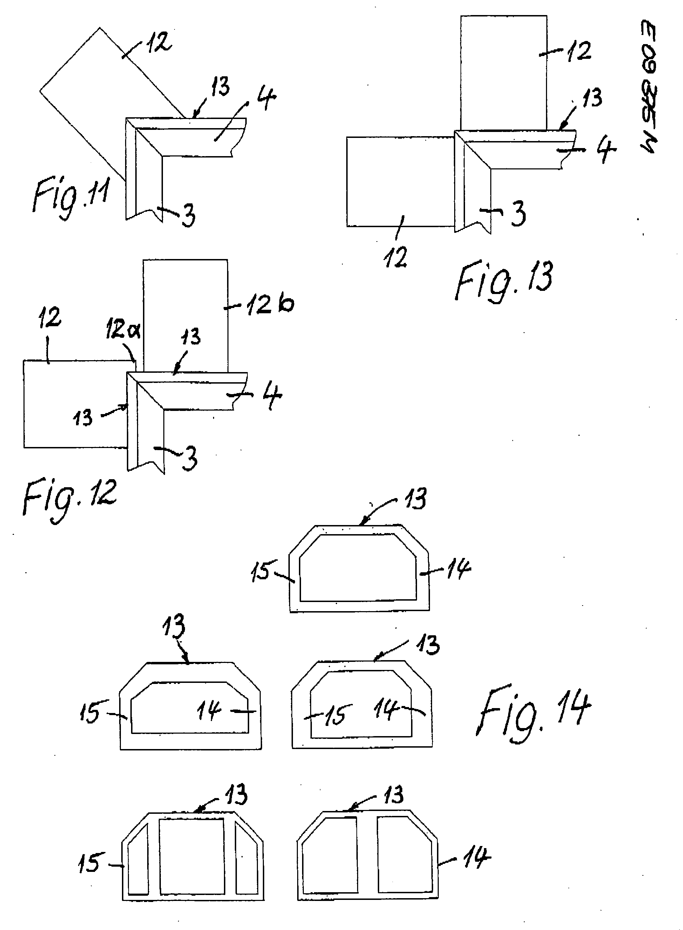

Es wurde schon mehrfach erwähnt, dass die Rahmenschenkel 3, 4, 5 und 6 nach dem Zusammenführen ihrer auf Gehrung geformten und zueinander passenden Enden an ihren Berührstellen verschweißt werden. Dies geschieht zweckmäßigerweise mit Hilfe von Ultraschall, indem in Figuren 1 bis 4 und 11 bis 13 schematisiert angedeutete Sonotroden 12 der jeweiligen an einer Schweißstation 8 angeordneten Ultraschall-Schweißvorrichtung 11 an die dem inneren Zwischenraum des Abstandhalterrahmens 2 abgewandten Außenseite 13 der Rahmenschenkel im Bereich der zu bildenden Ecke angelegt werden, wobei der Berührbereich der Rahmenschenkel gemäß den Figuren 11 bis 13 an ihrer gemeinsamen Ecke umfasst wird. Dabei werden die Eckbereiche an den die Dichtstellen des Abstandhalterrahmens 2 bildenden Stegen 14 der Rahmenschenkel während des Schweißvorganges niedergehalten und gegen eine Unterlage 15 gedrückt.

In den Figuren 1 und 2 ist dargestellt, dass die Vorrichtung 1 vier Ultraschall-Schweißvorrichtungen 11 für die vier zu bildenden Ecken des rechtwinkligen Abstandhalterrahmens 2 aufweist und jeder Schweißvorrichtung 11 beidseits eine Klemmeinrichtung 10 zugeordnet ist, die zu der Schweißvorrichtung 11 hin orientiert und/oder bewegbar ist.

Man erkennt in den Figuren 1 und 2, dass sich auf diese Weise für jeden Rahmenschenkel 3, 4, 5 und 6 zwei ihn erfassende Klemmeinrichtungen 10 ergeben. Die beiden rechtwinklig zueinander angeordneten Klemmeinrichtungen eines Eckbereiches sind dabei relativ zueinander in Richtung eines Rahmenschenkels und ihres Klemmspaltes verschiebbar, so dass gemäß Figur 2 beispielsweise zwei gemäß den Figuren 6 und 7 einzeln hergestellte Rahmenwinkel, d.h. aus zwei winklig zueinander angeordneten Rahmenschenkeln 3 und 4 oder 5 und 6 bestehende Zwischenprodukte des endgültigen Abstandhalterrahmens 2, an ihren noch offenen Seiten mittels den Klemmeinrichtungen 10 zusammenschiebbar und auf das jeweilige freie Ende beziehungsweise den winkelschenkel 7a eines Eckverbinders 7 steckbar sind, was in Figur 2 durch die Pfeile Pf 5 angedeutet ist. Man erkennt deutlich, dass es dabei genügen kann, zwei Schweißstationen 8, die einen der Rahmenwinkel erfassen, gemeinsam zu verschieben, während die anderen Schweißstationen 8 unbewegt bleiben, was zu der erwünschten Relativbewegung führt.

In Figur 2 ist ferner angedeutet, dass die Klemmeinrichtungen 10, die eine relative Verschiebung zum endgültigen Zusammenfügen entsprechend den Pfeilen Pf5 durchführen, unterteilt sind beziehungsweise ist deutlich, dass zwei beabstandete Klemmeinrichtungen 10 jeweils an einem gemeinsamen Rahmenschenkel angreifen. Die dem freien Ende eines zufügenden Rahmenschenkels nähere Klemmeinrichtung 10 kann nun während des Fügevorganges zunächst zum Aufbau einer ein Ausknicken dieses Rahmenschenkels bei dem Fügevorgang verhindernden Zugspannung in dem von ihr erfassten Rahmenschenkel dienen, was durch die entsprechende Zugkräfte symbolisierende Pfeile Pf6 in Figur 2 angedeutet ist. Werden die der jeweiligen Fügestelle näheren Enden der Rahmenschenkel durch die sie erfassenden Klemmeinrichtungen 10 in ihrer Längserstreckungsrichtung und in Richtung der Pfeile Pf6 beaufschlagt, entsteht in den entsprechenden Rahmenschenkeln, im Ausführungsbeispiel gemäß Figur 2 in den Rahmenschenkeln 4 und 6 eine Zugspannung, so dass die relativen Fügebewegungen gemäß den Pfeilen Pf5 nicht die Gefahr erzeugen, dass die Rahmenschenkel 4 und 6 bei dem Einschieben der Winkelschenkel 7a der Eckverbinder ausknicken könnten.

Dabei ist gemäß den Figuren 1 und 2 an allen vier Seiten der Vorrichtung 1 vorgesehen, dass jeweils zwei Klemmeinrichtungen 10 beabstandet vorgesehen sind, so dass unterschiedlichste Fügebewegungen in der beschriebenen Weise durchgeführt werden können.

Es sei an dieser Stelle erwähnt, dass die durch die Pfeile Pf1 bis Pf5 angedeuteten Bewegungen entsprechender Teile auch durch entgegengesetzte Bewegungen der jeweils anderen Teile ersetzt werden könnten, die Pfeile also zwar bevorzugte Bewegungen einerseits, andererseits aber auch ganz allgemein entsprechende Relativbewegungen bedeuten.

Die einer Ecke oder Schweißvorrichtung 11 jeweils nahe Klemmeinrichtung 10 kann von der gedachten oder beim Zusammenfügen zweier Rahmenschenkel gebildeten Ecke einen Abstand von etwa einem sechstel oder einem achtel oder einem zehntel Meter oder weniger oder auch einem Zwischenwert davon haben. Je näher die Klemmeinrichtungen 10 dem jeweiligen Eckbereich sind, umso geringer ist die Gefahr, dass bei den Steck- oder Fügebewegungen Verformungen der Rahmenschenkel durch Stauchen oder Knicken entstehen.

Für die mehrfach erwähnte Ultraschall-Verschweißung der Rahmenschenkel 3, 4, 5 und 6 an ihren gegenseitigen Berührstellen sind die schon erwähnten Sonotroden 12 erforderlich. Gemäß Figur 11 können die Sonotroden 12 für ein formschlüssiges Abstützen und Umfassen der Außenseite 13 der zu bildenden Ecke und somit der Rahmenschenkel eine negative rechtwinklige Ecke aufweisen, die während des Schweißvorgangs an der Außenseite 13 der zusammengefügten Rahmenschenkel anliegt.

Gemäß Figur 12 kann die Schweißvorrichtung 11 aber auch eine die Ecke mit einem Vorsprung 12a umfassende Sonotrode 11 und eine dazu beabstandete Sonotrode 12abaufweisen. Die unmittelbare negative rechtwinklige Ecke entsteht dabei also durch den Vorsprung 12a.

Schließlich können gemäß Figur 13 auch zwei Sonotroden 12 rechtwinklig zueinander unmittelbar im Eckbereich des Abstandhalterrahmens 2 angeordnet sein.

In den Figuren 1 bis 4 und dabei besonders deutlich in Figur 4 erkennt man, dass für den Eckbereich etwa zwischen den Klemmeinrichtungen 10 jeweils Niederhalter 19 vorgesehen sind, die zwei zu einer Ecke zu verbindende Rahmenschenkel im Eckbereich an der späteren an dem Steg 14 des jeweiligen Rahmenschenkels gebildeten Dichtfläche in Gebrauchsstellung berühren und gegen einen Gegenhalter 20 oder eine Auflage drücken, wo der jeweilige Steg 15 des jeweiligen Rahmenschenkels zur Anlage kommt, der die spätere gegenüberliegende Dichtfläche des Abstandhalterrahmens aufweist.

Figur 4 zeigt dabei auch, dass die Eckverbinder 7 und ihre winkelschenkel den Hohlquerschnitt der die Rahmenschenkel 3, 4, 5 und 6 bildenden Profile nicht ausfüllen muss, sondern dass es reicht, wenn dieser Eckverbinder zwischen der Außenseite 13 und der gegenüberliegenden Innenseite dieses Hohlquerschnitts verläuft. Somit können die Rahmenschenkel auch gegenüber Figur 4 abgewandelte Querschnittsformen haben, wie es in Figur 14 angedeutet ist.

In den Figuren 1 bis 4 erkennt man außerdem in den Eckbereichen der jeweiligen Schweißvorrichtung 11, also an den Schweißstationen 8 ein Widerlager 17, welches in Gebrauchsstellung von dem Schweißkopf, also der Sonotrode, einen der Dicke des Rahmenschenkels entsprechenden Abstand hat, wobei dieses Widerlager gemäß Figur 3 zwei rechtwinklig zueinander angeordnete Stützfläche 18 hat, also die zu einer Ecke vereinten beiden rechtwinkligen Rahmenschenkel im Eckbereich gleichzeitig abstützen kann, um die von den Sonotroden ausgehenden Kräfte aufnehmen zu können.

Bei gemeinsamer Betrachtung der Figuren 3 und 4 ist auch der Niederhalter 19 gut zu erkennen, der eine Druckkraft in Richtung des Pfeiles Pf7 ausüben kann, die also in der Ansicht gemäß Figur 3 etwa senkrecht zur Zeichenebene erfolgt. Damit werden die Rahmenschenkel im Eckbereich gemeinsam gegen die Auflage 20 gedrückt. Somit ergibt sich eine präzise Einfassung der Rahmenschenkel an allen vier Seiten in ihrem Eckbereich, so dass dieser Eckbereich während des Schweißvorganges mit großer Präzision gebildet und vor allem fixiert werden kann. Entsprechend genau sind die mit der Vorrichtung 1 und gemäß dem beschriebenen Verfahren hergestellten Abstandhalterrahmen 2.

Zum Herstellen eines rechteckigen Abstandhalterrahmens 2 für Isolierglasscheiben aus insbesondere thermoplastischem Kunststoff oder aus schweißbarem synthetischem Werkstoff werden vier jeweils zwischen den vier Ecken eines derartigen Rahmens 2 verlaufende Rahmenschenkel 3, 4, 5 und 6 mit Hilfe von ihre Enden eingreifenden Eckverbindern 7 verbunden und verschweißt. Dazu werden die einzelnen Rahmenschenkel an ihren beiden freien Enden auf Gehrung geformt oder geschnitten mit einem Gehrungswinkel von 45°. Vor dem Zusammenfügen jeweils zweier in Gebrauchsstellung rechtwinklig zueinanderstehende Rahmenschenkel z. B. 3 und 4 wird der gemeinsame Eckverbinder 7 in einen dieser Rahmenschenkel 3 endseitig eingesteckt und dann mit dem anderen Rahmenschenkel 4 in Richtung seines freien Winkelschenkels 7a zusammengesteckt, wobei entweder das eine oder das andere Teil in Steckrichtung bewegt wird, also eine Relativbewegung zwischen dem noch freien Winkelschenkel 7a und dem anzufügenden Rahmenschenkel 4 erfolgt. Dies kann in unterschiedlicher Reihenfolge an allen vier Ecken durchgeführt werden, wobei nach einem derartigen Fügevorgang die Verschweißung der jeweils an einer Ecke zusammenstoßenden Rahmenschenkel mit Hilfe von Ultraschall erfolgt.

## Patentansprüche

1. Verfahren zum Herstellen eines rechteckigen Abstandhalterrahmens (2) für Isolierglasscheiben aus Kunststoff mit vier jeweils zwischen den vier Rahmenecken angeordneten Rahmenschenkeln (3, 4, 5, 6) und mit in die Enden der Rahmenschenkel eingreifenden Eckverbindern (7), wobei die Eckverbinder zwei im rechten Winkel zueinander angeordnete Winkelschenkel (7a) haben, die in die Rahmenschenkel eingefügt werden, wonach die Rahmenschenkel miteinander verbunden werden, wobei, vor dem Zusammenfügen zweier in Gebrauchsstellung rechtwinklig zueinander stehender Rahmenschenkel der gemeinsame Eckverbinder (7) in einen dieser Rahmenschenkel endseitig eingesteckt und dann mit dem anderen Rahmenschenkel in Richtung seines freien Winkelschenkels (7a) maschinell zusammengesteckt oder der andere Rahmenschenkel in Richtung des freien Winkelschenkels (7a) auf diesen aufgesteckt wird, **dadurch gekennzeichnet, dass** die einzelnen Rahmenschenkel (3, 4, 5, 6) an ihren beiden freien Enden auf Gehrung geformt oder geschnitten werden, dass die Steckbewegung solange fortgesetzt wird, bis die auf Gehrung geformten Enden der Rahmenschenkel (3, 4, 5, 6) in Berührung miteinander gelangen, und dass die Berührstelle der beiden Rahmenschenkel zusammengedrückt und die Rahmenschenkel an der Berührstelle verschweißt oder verschmolzen werden, wobei zumindest die Eckbereiche an den die Dichtstellen des Abstandhalterrahmens (2) bildenden Stegen (14) während des Schweißvorganges niedergehalten und gemeinsam gegen einen Gegenhalter oder eine Auflage (20) gedrückt werden.

2. Verfahren nach Anspruch 1, **dadurch gekennzeichnet, dass** der Eckverbinder (7) mit einem Winkelschenkel (7a) in den ersten Rahmenschenkel vollständig eingefügt und danach der zweite Rahmenschenkel auf den noch freien Winkelschenkel (7a) des Eckverbinders (7) aufgeschoben und dabei verschiebbar verklemmt wird.

3. Verfahren nach Anspruch 1 oder 2, **dadurch gekennzeichnet, dass** der jeweils zunächst mit einem Rahmenschenkel zusammengesteckte Eckverbinder (7) mit seinem zuerst in einen Rahmenschenkel eingefügten Winkelschenkel (7a) verschiebbar verklemmt wird.

4. Verfahren nach einem der Ansprüche 1 bis 3, **dadurch gekennzeichnet, dass** in beide entgegengesetzten Enden eines Rahmenschenkels Eckverbinder eingefügt und zwei dazu passende Rahmenschenkel parallel zueinander maschinell aufgeschoben und verschweißt werden.

5. Verfahren nach einem der Ansprüche 1 bis 4, **dadurch gekennzeichnet, dass** ein Rahmenschenkel (3) mit zwei Eckverbindern (7) versehen und mit diesen in die freien Enden zweier paralleler, gegebenenfalls schon mit einem ersten rechtwinkligen Rahmenschenkel (4, 6) verbundener Rahmenschenkel eingeschoben und an den Berührstellen verschweißt wird.

6. Verfahren nach einem der Ansprüche 1 bis 5, **dadurch gekennzeichnet, dass** zwei rechtwinklig zueinander angeordnete Rahmenschenkel (3, 4) miteinander verbunden und am freien Ende eines dieser Rahmenschenkel (7) ein Eckverbinder angebracht und ein zweites Paar von rechtwinklig angeordneten Rahmenschenkeln (5, 6) gebildet und die Eckverbinder (7) in die freien Enden der beiden zum Schließen des Rahmens zu erfassenden Rahmenschenkel eingeschoben werden.

7. Verfahren nach einem der Ansprüche 1 bis 6, **dadurch gekennzeichnet, dass** jeweils zwei in Gebrauchsstellung rechtwinklig zueinander angeordnete Rahmenschenkel (3, 4; 5, 6) des zu bildenden Abstandhalterrahmens (2) an einer gemeinsamen Gehrungsstelle mit Hilfe eines Eckverbinders (7) abgestützt und verschweißt werden und dass danach diese beiden jeweils einen Winkel bildenden Rahmenteile in Richtung von aus freien Enden von Rahmenschenkeln vorstehenden Eckverbindern maschinell zusammengeschoben und an den dadurch gebildeten beiden diagonal einander gegenüberliegenden Ecken verschweißt werden.

8. Verfahren nach einem der Ansprüche 1 bis 7, **dadurch gekennzeichnet, dass** die Rahmenschenkel mittels Ultraschall verschweißt werden.

9. Verfahren nach einem der Ansprüche 1 bis 8, **dadurch gekennzeichnet, dass** die Sonotroden (12) der Ultraschall-Schweißvorrichtung (11) an die dem inneren Zwischenraum des Abstandhalterrahmens (2) abgewandte Außenseite (13) der zu bildenden jeweiligen Ecke angelegt werden, vorzugsweise in der Weise, dass der Berührbereich der Rahmenschenkel umfasst wird.

10. Vorrichtung (1) zum Herstellen eines rechteckigen Abstandhalterrahmens (2) für Isolierglasscheiben aus Kunststoff mit vier Rahmenschenkeln (3, 4, 5, 6) und vier Eckverbindern (7), die in die einander zugewandten Enden der Rahmenschenkel einsteckbar sind und in Gebrauchsstellung eingreifen, wobei die Rahmenschenkel (3, 4, 5, 6) in Gebrauchsstellung in den Eckbereichen miteinander verschweißt sind zur Durchführung des Verfahrens nach einem der Ansprüche 1 bis 9, wobei wenigstens zwei rechtwinklig zueinander angeordnete Klemmeinrichtungen (10) zum Erfassen zweier rechtwinklig an einer gemeinsamen Ecke zu verschweißender Rahmenschenkel vorgesehen sind, dass wenigstens eine dieser Klemmeinrichtungen (10) in Richtung der Orientierung ihres Klemmspalts und eines darin gehaltenen Rahmenschenkels bewegbar ist, **dadurch gekennzeichnet, dass** an der zwischen diesen beiden Klemmeinrichtungen (10) angeordneten Ecke eine Ultraschall-Schweißvorrichtung (11) angeordnet ist und dass für den Eckbereich zwischen den Klemmeinrichtungen (10) Niederhalter (19) vorgesehen sind, die jeweils zwei zu einer Ecke zu verbindende Rahmenschenkel im Eckbereich an der späteren Dichtfläche in Gebrauchsstellung berühren und gegen einen Gegenhalter oder eine Auflage (20) drücken.

11. Vorrichtung nach Anspruch 10, **dadurch gekennzeichnet, dass** zumindest diejenigen Klemmeinrichtungen (10), die eine relative Verschiebung zum endgültigen Zusammenfügen zweier schon vorgefügter Rahmenteile dienen, unterteilt oder aus zwei beabstandeten Klemmeinrichtungen (10) gebildet ist und dass die dem freien Ende eines zu fügenden Rahmenschenkels nähere Klemmeinrichtung (10) zunächst zum Aufbau einer ein Ausknicken des Rahmenschenkels bei dem Fügevorgang verhindernden Zugspannung in dem von ihr erfassten Rahmenschenkel dient.

12. Vorrichtung nach einem der Ansprüche 10 und 11, **dadurch gekennzeichnet, dass** die Sonotroden (12) für ein formschlüssiges Abstützen und Umfassen der Außenseite (13) der zu bildenden Ecke eine negative rechtwinklige Ecke aufweisen, die während des Schweißvorgangs an der Außenseite (13) der zusammengefügten Rahmenschenkel anliegt, oder dass die Schweißvorrichtung (11) eine die Ecke mit einem Vorsprung (14)umfassende Sonotrode (12) und eine dazu beabstandete Sonotrode (11a) aufweist.

13. Vorrichtung nach einem der Ansprüche 10 bis 12, **dadurch gekennzeichnet, dass** in den Eckbereichen der jeweiligen Schweißvorrichtung (12) oder dem Schweißkopf (11) ein Widerlager (17) zugeordnet ist, welches in Gebrauchsstellung von dem Schweißkopf (11) einen der Dicke des Rahmenschenkels entsprechenden Abstand hat und dass das Widerlager (17) vorzugsweise zwei rechtwinklig zueinander angeordnete Stützflächen (18) hat.

## Claims

1. Method for producing a rectangular spacer frame (2) for insulating glass panes, consisting of synthetic material and having four frame limbs (3, 4, 5, 6) each arranged between the four frame corners, and having corner connectors (7) engaging into the ends of the frame limbs, wherein the corner connectors have two angle limbs (7a) arranged at a right angle to each other and inserted into the frame limbs, whereupon the frame limbs are connected to each other, wherein, prior to assembling two frame limbs which are at right angles to each other in the use position, the common corner connector (7) is inserted at one end into one of these frame limbs and then mechanically assembled with the other frame limb in the direction of its free angle limb (7a) or the other frame limb is fitted onto the free angle limb (7a) in the direction thereof, **characterised in that** the individual frame limbs (3, 4, 5, 6) are mitred or cut at their two free ends, **in that** the insertion movement is continued until the mitred ends of the frame limbs (3, 4, 5, 6) move into contact with one another, and **in that** the contact point of the two frame limbs is compressed and the frame limbs are welded or fused at the contact point, wherein at least the corner regions are held down during the welding process at the webs (14) forming the sealing points of the spacer frame (2) and are jointly pressed against a counter-holder or a support (20).

2. Method as claimed in claim 1, **characterised in that** the corner connector (7) is completely inserted with an angle limb (7a) into the first frame limb and thereafter the second frame limb is slid onto the still free angle limb (7a) of the corner connector (7) and clamped therewith in a displaceable manner.

3. Method as claimed in claim 1 or 2, **characterised in that** the corner connector (7) initially assembled in each case with a frame limb is clamped in a displaceable manner with its angle limb (7a) initially inserted into a frame limb.

4. Method as claimed in any one of claims 1 to 3, **characterised in that** corner connectors are inserted into the two opposite ends of a frame limb and two frame limbs adapted thereto are mechanically slid on and welded in parallel with each other.

5. Method as claimed in any one of claims 1 to 4, **characterised in that** a frame limb (3) is provided with two corner connectors (7) and is slid therewith into the free ends of two parallel frame limbs, optionally already connected to a first rectangular frame limb (4, 6), and is welded at the contact points.

6. Method as claimed in any one of claims 1 to 5, **characterised in that** two frame limbs (3, 4) arranged at right angles to each other are connected together and a corner connector is attached at the free end of one of these frame limbs (7) and a second pair of frame limbs (5, 6) arranged at right angles is formed and the corner connectors (7) are slid into the free ends of the two frame limbs which are to be grasped in order to complete the frame.

7. Method as claimed in any one of claims 1 to 6, **characterised in that** in each case two frame limbs (3, 4; 5, 6), arranged at right angles to each other in the use position, of the spacer frame (2) to be formed are supported and welded on a common mitre point using a corner connector (7), and **in that** thereafter these two frame parts, each forming an angle, are mechanically pushed together in the direction of corner connectors protruding from free ends of frame limbs and are welded at the two thus formed corners which are diagonally opposite one another.

8. Method as claimed in any one of claims 1 to 7, **characterised in that** the frame limbs are welded using ultrasound.

9. Method as claimed in any one of claims 1 to 8, **characterised in that** the sonotrodes (12) of the ultrasonic welding device (11) are placed against the outer side (13), facing away from the inner intermediate space of the spacer frame (2), of the respective corner to be formed, preferably such that the contact region of the frame limbs is surrounded.

10. Device (1) for producing a rectangular spacer frame (2) for insulating glass panes, consisting of synthetic material and having four frame limbs (3, 4, 5, 6) and four corner connectors (7) which can be inserted into the mutually facing ends of the frame limbs and engage therein in the use position, wherein the frame limbs (3, 4, 5, 6) are welded together in the corner regions in the use position, for implementing the method as claimed in any one of claims 1 to 9, wherein at least two clamping devices (10) arranged at right angles to each other are provided for grasping two frame limbs which are to be welded at right angles at a common corner, in that at least one of these clamping devices (10) can be moved in the direction of orientation of its clamping gap and of a frame limb held therein, **characterised in that** an ultrasonic welding device (11) is arranged at the corner arranged between these two clamping devices (10), and **in that** hold-down devices (19) are provided for the corner region between the clamping devices (10) and each contact two frame limbs, which are to be connected to form a corner, in the corner region on the subsequent sealing surface in the use position and press same against a counter-holder or a support (20).

11. Device as claimed in claim 10, **characterised in that** at least those clamping devices (10) used for relative displacement for the ultimate assembly of two already pre-joined frame parts are divided or are formed from two spaced apart clamping devices (10), and **in that** the clamping device (10) closer to the free end of a frame limb to be joined is initially used for building up a tensile stress, preventing the frame limb from buckling during the joining process, in the frame limb grasped thereby.

12. Device as claimed in any one of claims 10 and 11, **characterised in that** the sonotrodes (12) for supporting, in a form-fitting manner, and surrounding the outer side (13) of the corner to be formed have a negative right-angled corner which, during the welding process, adjoins the outer side (13) of the assembled frame limbs, or **in that** the welding device (11) comprises a sonotrode (12) surrounding the corner with a protrusion (14) and a sonotrode (11a) spaced apart therefrom.

13. Device as claimed in any one of claims 10 to 12, **characterised in that** in the corner regions an abutment (17) is allocated to the respective welding device (12) or to the welding head (11) and in the use position is a distance away from the welding head (11) corresponding to the thickness of the frame limb, and **in that** the abutment (17) preferably has two support surfaces (18) arranged at right angles to each other.

## Revendications

1. °/ Procédé de fabrication d'un cadre intercalaire carré (2) pour des vitres d'isolation en matière plastique avec quatre branches de cadre (3, 4, 5, 6) disposées entre les quatre angles de cadre et avec des connecteurs d'angle (7) s'engageant dans les extrémités des branches de cadre, dans lequel les connecteurs d'angle comportent deux branches d'angle (7a) disposées à angle droit l'une par rapport à l'autre, qui sont engagées dans les branches de cadre, puis les branches de cadre sont assemblées les unes aux autres, dans lequel, avant l'assemblage de deux branches de cadre placées perpendiculairement l'une à l'autre en position d'utilisation, le connecteur d'angle commun (7) est enfoncé dans l'extrémité d'une de ces branches de cadre et est ensuite assemblé mécaniquement à l'autre branche de cadre dans la direction de sa branche d'angle (7a) libre ou l'autre branche de cadre est engagée en direction de la branche d'angle (7a) libre sur celle-ci, **caractérisé en ce que** les branches de cadre individuelles (3, 4, 5, 6) sont formées ou coupées en onglet à leurs deux extrémités libres, **en ce que** le mouvement d'engagement est poursuivi jusqu'à ce que les extrémités des branches de cadre (3, 4, 5, 6) formées en onglet viennent en contact l'une avec l'autre, et **en ce que** le point de contact des deux branches de cadre est comprimé et les branches de cadre sont soudées ou fusionnées au point de contact, dans lequel au moins les régions d'angle sont immobilisées aux nervures (14) formant les points d'étanchéité du cadre intercalaire (2) pendant l'opération de soudage et sont pressées ensemble contre un support opposé ou un appui (20).

2. °/ Procédé selon la revendication 1, **caractérisé en ce que** le connecteur d'angle (7) est introduit entièrement avec une branche d'angle (7a) dans la première branche de cadre et ensuite la deuxième branche de cadre est engagée sur la branche d'angle (7a) encore libre du connecteur d'angle (7) et est en l'occurrence pincée de façon coulissante.

3. °/ Procédé selon la revendication 1 ou 2, **caractérisé en ce que** le connecteur d'angle (7) respectivement assemblé d'abord avec une branche de cadre est pincé de façon coulissante avec sa branche d'angle (7a) insérée en premier lieu dans une branche de cadre.

4. °/ Procédé selon l'une quelconque des revendications 1 à 3, **caractérisé en ce que** des connecteurs d'angle sont insérés dans les deux extrémités opposées d'une branche de cadre et deux branches de cadre adaptées à ceux-ci sont engagées à la machine parallèlement l'une à l'autre et soudées.

5. °/ Procédé selon l'une quelconque des revendications 1 à 4, **caractérisé en ce qu'**une branche de cadre (3) est munie de deux connecteurs d'angle (7) et est insérée avec ceux-ci dans les extrémités libres de deux branches de cadre parallèles, éventuellement déjà assemblées à une première branche de cadre perpendiculaire (4, 6) et elle est soudée aux points de contact.

6. °/ Procédé selon l'une quelconque des revendications 1 à 5, **caractérisé en ce que** deux branches de cadre (3, 4) disposées perpendiculairement l'une à l'autre sont assemblées l'une à l'autre et un connecteur d'angle est monté à l'extrémité libre d'une de ces branches de cadre (7) et une deuxième paire de branches de cadre (5, 6) disposées perpendiculairement l'une à l'autre est formée et les connecteurs d'angle (7) sont insérés dans les extrémités libres des deux branches de cadre à saisir pour fermer le cadre.

7. °/ Procédé selon l'une quelconque des revendications 1 à 6, **caractérisé en ce que** chaque fois deux branches de cadre (3, 4; 5, 6) du cadre intercalaire à former (2) disposées perpendiculairement l'une à l'autre dans la position d'utilisation sont appuyées sur un point de coupe en onglet commun à l'aide d'un connecteur d'angle (7) et sont soudées et **en ce que** ces deux parties de cadre formant respectivement un angle sont ensuite assemblées à la machine en direction de connecteurs d'angle saillants hors des extrémités libres de branches de cadre et sont soudées aux deux angles diagonalement opposés l'un à l'autre ainsi formés.

8. °/ Procédé selon l'une quelconque des revendications 1 à 7, **caractérisé en ce que** les branches de cadre sont soudées aux ultrasons.

9. °/ Procédé selon l'une quelconque des revendications 1 à 8, **caractérisé en ce que** les sonotrodes (12) du dispositif de soudage aux ultrasons (11) sont appliquées sur le côté extérieur (13) de l'angle respectif à former, qui est détourné de l'espace intermédiaire intérieur du cadre intercalaire (2), de préférence de telle manière que la zone de contact des branches de cadre soit comprise.

10. °/ Dispositif (1) de fabrication d'un cadre intercalaire carré (2) pour des vitres d'isolation en matière plastique avec quatre branches de cadre (3, 4, 5, 6) et quatre connecteurs d'angle (7), qui peuvent être engagés dans les extrémités tournées l'une vers l'autre des branches de cadre et s'y engagent en position d'utilisation, dans lequel les branches de cadre (3, 4, 5, 6) sont soudées l'une à l'autre dans les régions d'angle en position d'utilisation pour la mise en oeuvre du procédé selon l'une quelconque des revendications 1 à 9, dans lequel il est prévu au moins deux dispositifs de serrage (10) disposés perpendiculairement l'un à l'autre pour la saisie de deux branches de cadre à souder perpendiculairement en un angle commun, dans lequel au moins un de ces dispositifs de serrage (10) est mobile dans la direction de l'orientation de sa fente de serrage et d'une branche de cadre maintenue dans celle-ci, **caractérisé en ce qu'**un dispositif de soudage aux ultrasons (11) est disposé à l'angle disposé entre ces deux dispositifs de serrage (10) et **en ce qu'**il est prévu pour la région d'angle entre les dispositifs de serrage (10) des serre-flans (19) qui touchent chaque fois deux branches de cadre à assembler en un angle dans la région d'angle sur la future face d'étanchéité en position d'utilisation et les pressent contre un support opposé ou un appui (20).

11. °/ Dispositif selon la revendication 10, **caractérisé en ce qu'**au moins les dispositifs de serrage (10), qui permettent un déplacement relatif pour l'assemblage final de deux parties de cadre déjà préassemblées, sont subdivisés ou sont formés de deux dispositifs de serrage espacés (10), et **en ce que** le dispositif de serrage (10) plus proche de l'extrémité libre d'une branche de cadre à assembler sert d'abord pour la création d'une contrainte de traction empêchant un flambement de la branche de cadre lors de l'opération d'assemblage dans la branche de cadre saisie par celle-ci.

12. °/ Dispositif selon une des revendications 10 et 11, **caractérisé en ce que** les sonotrodes (12) présentent, pour un soutien et une saisie par emboîtement du côté extérieur (13) de l'angle à former, un angle droit négatif qui s'applique pendant l'opération de soudage sur le côté extérieur (13) des branches de cadre assemblées ou **en ce que** le dispositif de soudage (11) présente une sonotrode (12) entourant une saillie (14) et une sonotrode (1 la) espacée de celle-ci.

13. °/ Dispositif selon l'une quelconque des revendications 10 à 12, **caractérisé en ce qu'**un contre-appui (17) est associé dans les régions d'angle au dispositif de soudage respectif (12) ou à la tête de soudage (11), lequel présente en position d'utilisation une distance de la tête de soudage (11) correspondant à l'épaisseur de la branche de cadre et **en ce que** le contre-appui (17) comporte de préférence deux faces d'appui (18) disposées perpendiculairement l'une à l'autre.
